# EUROPEAN PATENT APPLICATION

(11) **EP 4 571 922 A1**
(43) Date of publication of application: **18.06.2025**
(21) Application number: 23887745.0
(22) Date of filing: 20.10.2023
(51) Int. Cl.: H01M 10/0567

(54) **ELECTROLYTE AND LITHIUM ION BATTERY**

(30) Priority: 10.11.2022 CN 202211402785
(71) Applicant: Hefei Gotion High-Tech Power Energy Co., Ltd., Hefei, Anhui 230012 (CN)
(72) Inventor: LIU, Xin, Hefei, Anhui 230012 (CN); LIANG, Dayu, Hefei, Anhui 230012 (CN); LI, Daocong, Hefei, Anhui 230012 (CN); YANG, Maoping, Hefei, Anhui 230012 (CN)
(74) Representative: Studio Torta S.p.A.
(86) International application number: PCT/CN2023/125698
(87) International publication number: WO 2024/099053

(57) **Abstract**

Provided are electrolyte and lithium ion battery. The electrolyte includes an organic solvent, LiPF₆, and an additive, the additive includes heptamethyldisilazane and a cyanosilane compound, and the cyanosilane compound has the following structural formula: 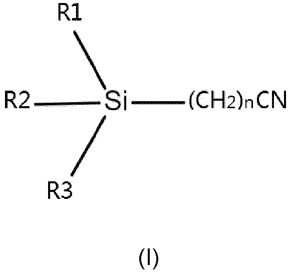 formula (I), herein n is any one integer from 1 to 6, R1, R2, and R3 are each independently selected from any one or more of substituted or unsubstituted C₁-C₁₀ alkyl, substituted or unsubstituted C₁-C₁₀ alkoxy, substituted or unsubstituted C₂-C₁₀ alkynyl, substituted or unsubstituted C₆-C₁₂ alkylaryl, and (R4)₃SiO-, and R4 is selected from any one of substitute or unsubstitnted C₁-C₁₀ alkyl. The electrolyte may reduce the low-temperature direct current internal resistance of the lithium ion battery, improve the cycle performance of the lithium ion battery, reduce the growth rate of the direct current internal resistance in the cycle process, and effectively improve the stability and safety of the lithium ion battery on the whole.

## Description

This application is based upon and claims priority to Chinese Patent Application No. 202211402785.6 filed on November 10, 2022, the disclosure of which is hereby incorporated by reference again in its entirety.

### Technical Field

The present disclosure relates to the technical field of lithium ion batteries, in particular to electrolyte and lithium ion battery.

### Background

Lithium ion batteries have the advantages of high energy density, long cycle life, no memory effect and the like, and are widely researched and applied. At present, the cathode materials of commercialized high-capacity lithium ion batteries mainly include lithium cobalt oxide, lithium manganese oxide, lithium nickel manganese oxide, ternary materials and the like. In order to meet the needs of sustainable operation of portable electronic products and electric vehicles, the lithium ion batteries need to have high energy density, high specific energy density, and long cycle life.

The main ways to improve the energy density currently include using cathode and anode active materials with high specific capacity, adding additives, and increasing the operating voltages of the lithium ion batteries. Herein, increasing the working voltages of the lithium ion batteries may lead to an increase in the oxidation of the cathode active material, and make the electrolyte more prone to oxidation and decomposition, this not only generates a large amount of gas by-products causing battery swelling, but also solid by-products deposit on the surface of the cathode material, so that the battery interface impedance is sharply increased, and the battery performance is rapidly degraded. In addition, currently commercialized additives may only improve the high-temperature or low-temperature performance of the batteries, and there are few additives that balance high and low temperatures.

### Summary

The main purpose of the present disclosure is to provide electrolyte and lithium ion battery, as to solve the problem in existing technologies that lithium ion batteries are difficult to achieve the excellent cycling capacity retention rate and other electrical properties at high and low temperatures.

In order to achieve the above purpose, according to one aspect of the present disclosure, an electrolyte is provided, the electrolyte includes an organic solvent, LiPF₆, and an additive, the additive includes heptamethyldisilazane and a cyanosilane compound, and the cyanosilane compound has the following structural formula:

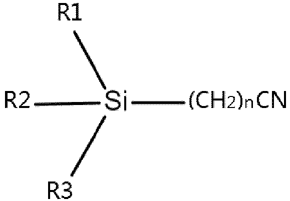

Herein, n is any one integer from 1 to 6, R1, R2, and R3 are each independently selected from any one or more of substituted or unsubstituted C₁-C₁₀ alkyl, substituted or unsubstituted C₁-C₁₀ alkoxy, substituted or unsubstituted C₂-C₁₀ alkynyl, substituted or unsubstituted C₆-C₁₂ alkylaryl, and (R4)₃SiO-, and R4 is selected from any one of substitute or unsubstitnted C₁-C₁₀ alkyl.

Further, the above n is any one integer from 1 to 3, preferably R1, R2, and R3 are each independently selected from any one or more of substituted or unsubstituted C₁-C₄ alkyl, substituted or unsubstituted C₁-C₄ alkoxy, substituted or unsubstituted C₂-C₄ alkynyl, substituted or unsubstituted phenyl, and (R4)₃SiO-, and R4 is selected from any one of substituted or unsubstituted C₁-C₄ alkyl; and preferably R1, R2, and R3 are each independently selected from any one or more of methyl, ethyl, methoxy, ethoxy, ethynyl, phenyl, (CH₃)₃SiO-, and (CH₃CH₂)₃SiO-, and preferably the cyanosilane compound is selected from any one or more of

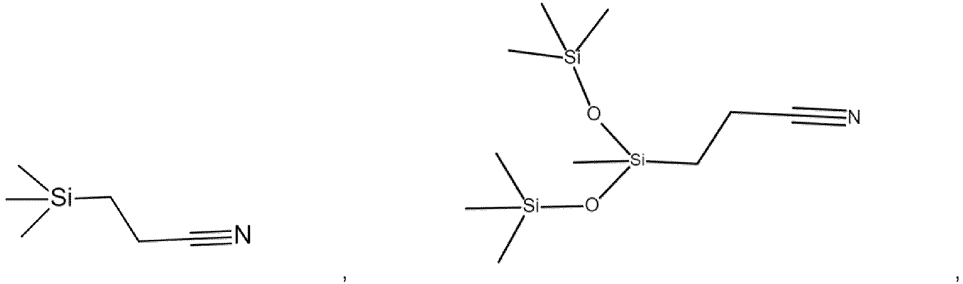

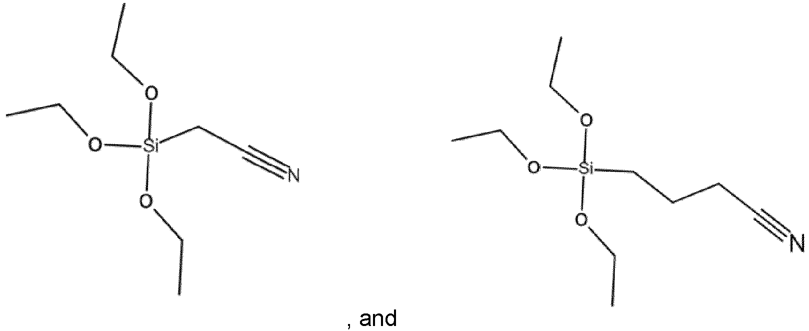

Further, the mass of the above heptamethyldisilazane is 0.1-5 wt% of the total mass of the electrolyte, preferably 0.5-3 wt%, the mass of the cyanosilane compound is 0.1-5 wt% of the total mass of the electrolyte, preferably 0.5-3 wt%, and preferably the mass ratio of the heptamethyldisilazane to the cyanosilane compound is 1:4-2:1.

Further, the above organic solvent is selected from any one or more of ethylene carbonate, propylene carbonate, dimethyl carbonate, diethyl carbonate, methyl ethyl carbonate, methyl propyl carbonate, ethyl acetate, γ-butyrolactone, propyl propionate, ethyl propionate, 1,3-dioxane, and diethylene glycol dimethyl ether, preferably the organic solvent is a combination of the methyl ethyl carbonate, the ethylene carbonate, and the diethyl carbonate, and preferably the volume ratio of the methyl ethyl carbonate, the ethylene carbonate, and the diethyl carbonate is 5-8:3-5:2-4.

Further, the above electrolyte further includes a lithium salt additive, preferably the concentration of the lithium salt additive is 0.1-5 wt%, preferably the lithium salt additive is selected from any one or more of lithium hexafluoroarsenate, lithium perchlorate, lithium tetrafluoroborate, lithium methylsulfonate, lithium trifluoromethanesulfonate, lithium bis-trifluoromethanesulfonimide, and lithium bis-oxalate borate, and further, preferably the lithium salt additive is the lithium tetrafluoroborate and/or the lithium bis-trifluorosulfonimide.

Further, the concentration of the above LiPF₆ is 0.5-1.5 mol/L.

Further, the above electrolyte further includes a functional additive, preferably the functional additive is 0.1-5 wt% of the total mass of the electrolyte, further, preferably the functional additive is selected from any one or more of a cyclic additive, a low-temperature additive, a high-temperature additive, a flame retardant additive, and an overcharge prevention additive, and furthermore, preferably the functional additive is selected from any one or more of vinylene carbonate, fluorinated ethylene carbonate, ethylene sulfate, tris(trimethylsilane) phosphate ester, 1,3-propanesultone, methylene methanedisulfonate, 1,3,6-hexane trinitrile, tris(pentafluorophenyl) borane, lithium difluorophosphate, 3-hexylthiophene, hexafluorocyclotriphosphonitrile, and tris(hexafluoroisopropyl) phosphate ester.

Further, the above electrolyte includes methyl ethyl carbonate, ethylene carbonate, diethyl carbonate, LiPF₆, vinylene carbonate, heptamethyldisilazane, and 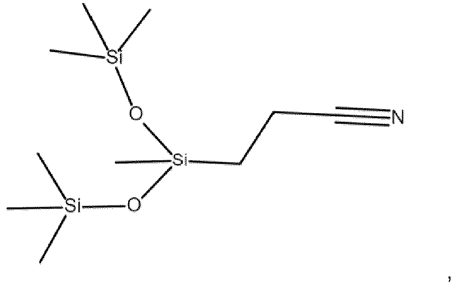 herein the heptamethyldisilazane is 2 wt% of the electrolyte, and the 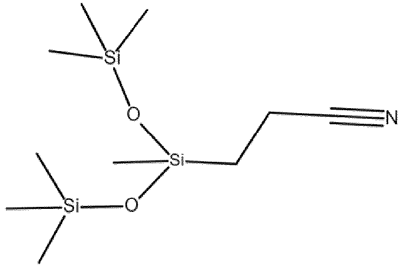 is 1 wt% of the electrolyte; or the heptamethyldisilazane is 1 wt% of the electrolyte, and the 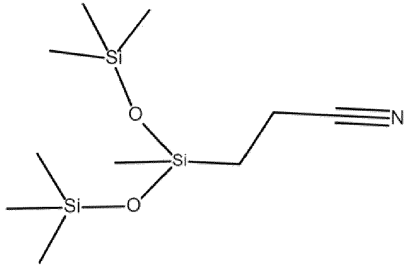 is 2 wt% of the electrolyte; or the heptamethyldisilazane is 0.6 wt% of the electrolyte, and the 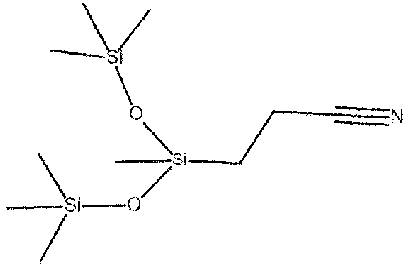 is 2.4 wt% of the electrolyte; or the cyanosilane compound is 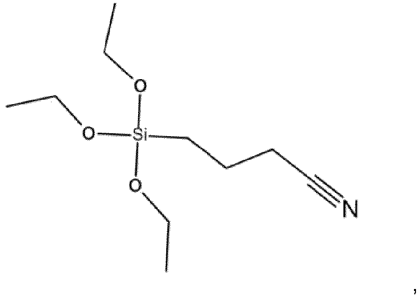 and the heptamethyldisilazane is 2 wt% of the electrolyte, the 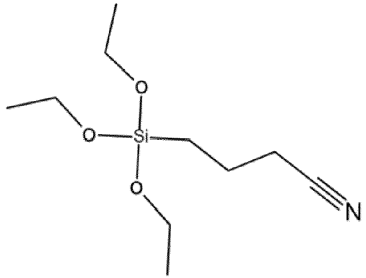 is 1 wt% of the electrolyte.

According to another aspect of the present disclosure, a lithium ion battery is provided, including a cathode plate, an anode plate, and an electrolyte, and the electrolyte is the above electrolyte.

Further, the above cathode plate includes a cathode active substance, preferably the cathode active substance is selected from any one or more of lithium cobalt oxide, lithium manganese oxide, lithium nickel manganese oxide, lithium nickel cobalt manganese oxide, and lithium-rich lithium manganese oxide, preferably the anode plate includes an anode active substance, and preferably the anode active substance is selected from any one or more of natural graphite, artificial graphite, silicon, and lithium titanate.

By applying technical schemes of the present disclosure, a part of the heptamethyldisilazane may be combined with a hydrogen fluoride (HF) to form a stable amine salt compound, and HF is effectively removed. At the same time, the remaining heptamethyldisilazane is preferentially oxidized on the cathode surface over the solvent, to form a chemical-electrochemical interface (CEI) membrane, thereby the problem of gas production and transition metal dissolution under the high voltage is improved, and the high-temperature cycle performance of the lithium ion batteries is enhanced. The cyanosilane compound is preferred for both solvent oxidation and solvent reduction, and may form a solid electrolyte interface (SEI) membrane and the CEI membrane on the cathode and anode surfaces. The CEI membrane containing an Si-C≡N structure has the higher conductivity, and it is more helpful to reduce the impedance and thus reduce the low-temperature direct current internal resistance of the lithium ion batteries. In addition, the amine salt compound may participate in the formation of the SEI membrane and the CEI membrane by the cyanosilane compound and act as a part of the SEI membrane and the CEI membrane. It is not only beneficial to improve the conductivity of the SEI membrane and the CEI membrane, but also the SEI membrane and the CEI membrane obtained by the synergistic effect of the heptamethyldisilazane and the cyanosilane compound are thinner, more uniform, and denser, thereby the low-temperature direct current internal resistance of the lithium ion battery may be further reduced, the cycle performance of the lithium ion battery is improved, the growth rate of the direct current internal resistance in the cycle process is reduced, and the stability and safety of the lithium ion battery are effectively improved on the whole.

### Detailed Description of the Embodiments

It should be noted that embodiments in the present disclosure and features in the embodiments may be combined with each other without conflicting. The present disclosure is described in detail below in combination with the embodiments.

As analyzed in the background, the lithium ion batteries in the existing technologies are difficult to achieve the excellent cycling capacity retention rate and other electrical properties at both high and low temperatures. In order to solve this problem, the present disclosure provides electrolyte and lithium ion battery.

In a typical implementation mode of the present disclosure, an electrolyte is provided, the electrolyte includes an organic solvent, LiPF₆, and an additive, the additive includes heptamethyldisilazane and a cyanosilane compound, and the cyanosilane compound has the following structural formula:

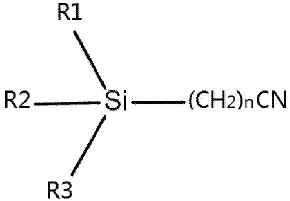

Herein, n is any one integer from 1 to 6, R1, R2, and R3 are each independently selected from any one or more of substituted or unsubstituted C₁-C₁₀ alkyl, substituted or unsubstituted C₁-C₁₀ alkoxy, substituted or unsubstituted C₂-C₁₀ alkynyl, substituted or unsubstituted C₆-C₁₂ alkylaryl, and (R4)₃SiO-, and R4 is selected from any one of substitute or unsubstitnted C₁-C₁₀ alkyl.

A part of the heptamethyldisilazane may be combined with an **HF** to form a stable amine salt compound, and **HF** is effectively removed. At the same time, the remaining heptamethyldisilazane is preferentially oxidized on the cathode surface over the solvent, to form a CEI membrane, thereby the problem of gas production and transition metal dissolution under the high voltage is improved, and the high-temperature cycle performance of the lithium ion batteries is enhanced. The cyanosilane compound is preferred for both solvent oxidation and solvent reduction, and may form an SEI membrane and the CEI membrane on the cathode and anode surfaces. The CEI membrane containing a Si-C≡N structure has the higher conductivity, and it is more helpful to reduce the impedance and thus reduce the low-temperature direct current internal resistance of the lithium ion batteries. In addition, the amine salt compound may participate in the formation of the SEI membrane and the CEI membrane by the cyanosilane compound and act as a part of the SEI membrane and the CEI membrane. It is not only beneficial to improve the conductivity of the SEI membrane and the CEI membrane, but also the SEI membrane and the CEI membrane obtained by the synergistic effect of the heptamethyldisilazane and the cyanosilane compound are thinner, more uniform, and denser, thereby the low-temperature direct current internal resistance of the lithium ion battery may be further reduced, the cycle performance of the lithium ion battery is improved, the growth rate of the direct current internal resistance in the cycle process is reduced, and the stability and safety of the lithium ion battery are effectively improved on the whole.

In an embodiment of the present disclosure, the above n is any one integer from 1 to 3, preferably R1, R2, and R3 are each independently selected from any one or more of substituted or unsubstituted C₁-C₄ alkyl, substituted or unsubstituted C₁-C₄ alkoxy, substituted or unsubstituted C₂-C₄ alkynyl, substituted or unsubstituted phenyl, and (R4)₃SiO-, and R4 is selected from any one of substituted or unsubstituted C₁-C₄ alkyl; and preferably R1, R2, and R3 are each independently selected from any one or more of methyl, ethyl, methoxy, ethoxy, ethynyl, phenyl, (CH₃)₃SiO-, and (CH₃CH₂)₃SiO-, and preferably the cyanosilane compound is selected from any one or more of 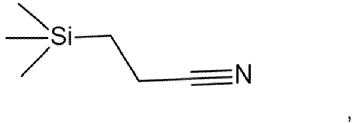 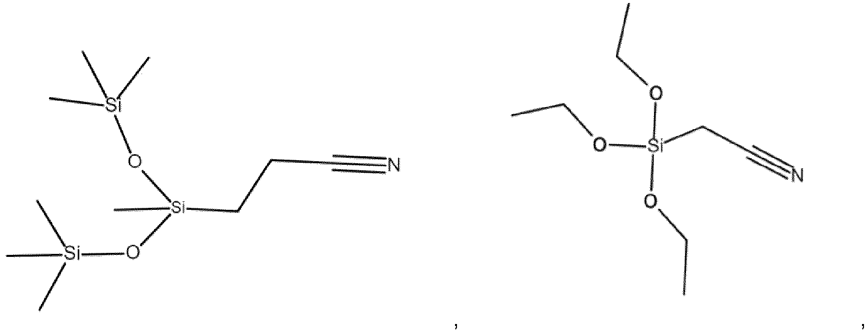 and

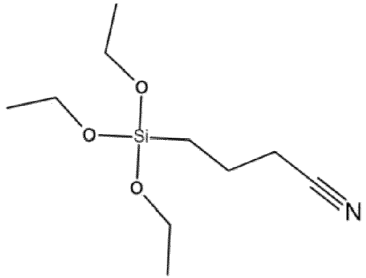

The SEI membrane and the CEI membrane formed by the above type of the cyanosilane compound are more uniform and denser.

In order to further improve the interaction effect between the heptamethyldisilazane and the cyanosilane compound, preferably the mass of the above heptamethyldisilazane is 0.1-5 wt% of the total mass of the electrolyte, preferably 0.5-3 wt%, and the mass of the cyanosilane compound is 0.1-5 wt% of the total mass of the electrolyte, preferably 0.5-3 wt%. Preferably the mass ratio of the above heptamethyldisilazane to the cyanosilane compound is 1:4-2:1, and it is more beneficial for the synergistic effect of the heptamethyldisilazane and the cyanosilane compound.

In an embodiment of the present disclosure, preferably the above organic solvent is selected from any one or more of ethylene carbonate, propylene carbonate, dimethyl carbonate, diethyl carbonate, methyl ethyl carbonate, methyl propyl carbonate, ethyl acetate, γ-butyrolactone, propyl propionate, ethyl propionate, 1,3-dioxane, and diethylene glycol dimethyl ether, preferably the organic solvent is a combination of the methyl ethyl carbonate, the ethylene carbonate, and the diethyl carbonate, and preferably the volume ratio of the methyl ethyl carbonate, the ethylene carbonate, and the diethyl carbonate is 5-8:3-5:2-4.

The above type of the organic solvent may better avoid the damage of water to the electrolyte, and it is beneficial to promote the more complete dissolution of various components in the electrolyte at the same time, thereby the synergy between the various components is improved, and the electrolyte with excellent electrical properties is obtained.

In order to enhance the coordination between lithium salt additive, lithium salt, and additive, and thus improve the overall performance of the electrolyte, preferably the above electrolyte further includes a lithium salt additive, preferably the concentration of the lithium salt additive is 0.1-5 wt%, preferably the lithium salt additive is selected from any one or more of lithium hexafluoroarsenate, lithium perchlorate, lithium tetrafluoroborate, lithium methylsulfonate, lithium trifluoromethanesulfonate, lithium bis-trifluoromethanesulfonimide, and lithium bis-oxalate borate, and further, preferably the lithium salt additive is the lithium tetrafluoroborate and/or lithium bis-trifluorosulfonimide.

In order to further improve the electrolyte and obtain the lithium ion battery with better comprehensive performance, preferably the above electrolyte further includes a functional additive, preferably the functional additive is 0.1-5 wt% of the total mass of the electrolyte, further, preferably the functional additive is selected from any one or more of a cyclic additive, a low-temperature additive, a high-temperature additive, a flame retardant additive, and an overcharge prevention additive, and furthermore, preferably the functional additive is selected from any one or more of vinylene carbonate, fluorinated ethylene carbonate, ethylene sulfate, tris(trimethylsilane) phosphate ester, 1,3-propanesultone, methylene methanedisulfonate, 1,3,6-hexane trinitrile, tris(pentafluorophenyl) borane, lithium difluorophosphate, 3-hexylthiophene, hexafluorocyclotriphosphonitrile, and tris(hexafluoroisopropyl) phosphate ester.

Preferably the above electrolyte includes methyl ethyl carbonate, ethylene carbonate, diethyl carbonate, LiPF₆, vinylene carbonate, heptamethyldisilazane, and 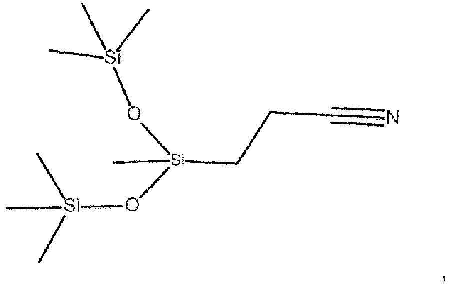 herein the heptamethyldisilazane is 2 wt% of the electrolyte, and the 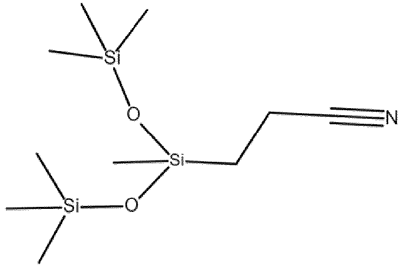 is 1 wt% of the electrolyte; or the heptamethyldisilazane is 1 wt% of the electrolyte, and the 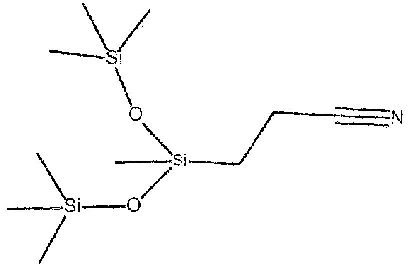 is 2 wt% of the electrolyte; or the heptamethyldisilazane is 0.6 wt% of the electrolyte, and the 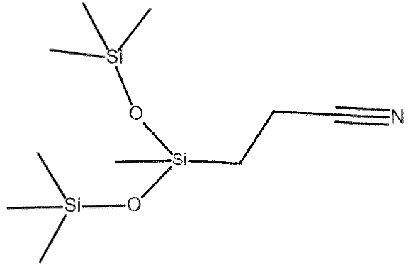 is 2.4 wt% of the electrolyte; or the cyanosilane compound is 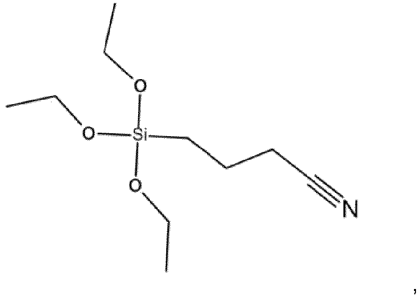 and the heptamethyldisilazane is 2 wt% of the electrolyte, the 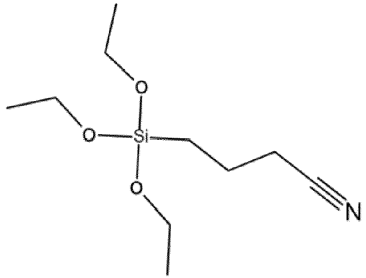 is 1 wt% of the electrolyte, it is more beneficial to obtain the lithium ion battery with excellent comprehensive performance. Further, preferably the mass ratio of the methyl ethyl carbonate, the ethylene carbonate, and the diethyl carbonate is 5:3:2, the concentration of LiPF₆ is 1 mol/L, and the vinylene carbonate is 1 wt% of the electrolyte.

In another typical implementation mode of the present disclosure, a lithium ion battery is provided, including a cathode plate, an anode plate, and an electrolyte, and the electrolyte is the aforementioned electrolyte.

The lithium ion battery using the above electrolyte has the lower impedance, which may significantly reduce the low-temperature direct current internal resistance of the lithium ion battery, improve the cycle performance of the lithium ion battery, reduce the growth rate of the direct current internal resistance in the cycle process, and effectively improve the stability and safety of the lithium ion battery on the whole.

In order to improve the coordination between the electrolyte and the cathode plate, preferably the above cathode plate includes a cathode active substance, preferably the cathode active substance is selected from any one or more of lithium cobalt oxide, lithium manganese oxide, lithium nickel manganese oxide, lithium nickel cobalt manganese oxide, and lithium-rich lithium manganese oxide, preferably the anode plate includes an anode active substance, and preferably the anode active substance is selected from any one or more of natural graphite, artificial graphite, silicon, and lithium titanate.

The beneficial technical effects of the present disclosure are described below in combination with specific embodiments and contrast embodiments.

### Embodiment 1

Preparation of electrolyte: ethylene carbonate (EC), diethyl carbonate (DEC), and methyl ethyl carbonate (EMC) were mixed in a mass ratio of 5:3:2. After being mixed, 1 mol of lithium hexafluorophosphate (LiPF₆) electrolyte (100 g), 0.5 wt% of heptamethyldisilazane (calculated by the total mass of the electrolyte), and 0.5 wt% of a cyanosilane compound 2 (calculated by the total mass of the electrolyte) were added, then 1 wt% of vinylene carbonate (calculated by the total mass of the electrolyte) and lithium tetrafluoroborate at a concentration of 1 wt% were added.

Preparation of cathode plate: a lithium cobalt manganese oxide ternary material LiNi_{0.7}Co_{0.1}Mn_{0.2}O₂, a conductive agent Super P, an adhesive PVDF, and carbon nanotubes (CNT) were mixed uniformly in a mass ratio of 97.5:0.5:1:1 to form lithium ion battery cathode slurry with a certain viscosity. The slurry was coated on an aluminum foil for a current collector, its coating amount was 360 g/m², and it was dried at 85°C before cold pressing; and dividing and slicing were performed, then it was baked in vacuum at 85°C for 4 h, to prepare the lithium ion battery cathode plate meeting the requirements.

Preparation of anode plate: artificial graphite, the conductive agent Super P, a thickening agent CMC and an adhesive SBR (styrene butadiene rubber emulsion) were slurried in a mass ratio of 95:1.5:1.0:2.5, and mixed uniformly, the mixed slurry was coated on both sides of a copper foil, dried and rolled to obtain an anode plate, and then it was baked at 85°C for 4 h to prepare the lithium ion battery anode plate meeting the requirements.

Preparation of lithium ion battery: the cathode plate and the anode plate prepared according to the above process and a diaphragm (polyethylene film coated ceramic diaphragm) were laminated into a lithium ion battery with a thickness of 0.5 mm, a width of 8 mm, and a length of 10 mm, and the capacity was 3 Ah. It was baked in vacuum at 85°C for 48 h, the above electrolyte was injected, and the 3 Ah soft pack lithium ion battery was prepared by packaging, shelving, formation, aging, secondary packaging, and capacity division and other working procedures.

In Embodiments 2 to 9, Contrast embodiment 1, and Contrast embodiment 2, the lithium ion battery was prepared by changing the ratios and types of specific substances in the electrolyte, and referring to the preparation method in Embodiment 1. The electrolyte formula was shown in Table 1 below.

**Table 1**

| Embodiment/Contrast embodiment | Electrolyte composition | Heptamethyldisilazan e (wt%) | Cyanosilane compound (wt%) | Concentration of conventional |
|---|---|---|---|---|
| Embodiment 1 | EC:DEC:EMC=5: 3:2, 1mol/L LiPF₆, 1 wt% | 0.5 | 0.5 | 1 wt% lithium tetrafluorobor ate |
| Embodiment 2 | EC:DEC:EMC=5: 3:2, 1mol/L LiPF₆, 1 wt% | 3 | 3 | 1 wt% lithium tetrafluorobor ate |
| Embodiment 3 | EC:DEC:EMC=5: 3:2, 1mol/L LiPF₆, 1 wt% | 1 | 2 | 1 wt% lithium tetrafluorobor ate |
| Embodiment 4 | EC:DEC:EMC=5: 3:2, 1mol/L LiPF₆, 1 wt% | 2 | 1 | 1 wt% lithium tetrafluorobor ate |
| Embodiment 5 | EC:DEC:EMC=5: 3:2, 1mol/L LiPF₆, 1 wt% | 0.6 | 2.4 | 1 wt% lithium tetrafluorobor ate |
| Embodiment 6 | EC:DEC:EMC=5: 3:2, 1mol/L LiPF₆, 1 wt% | 0.4 | 2.6 | 1 wt% lithium tetrafluorobor ate |
| Embodiment 7 | EC:DEC:EMC=5: 3:2, 1mol/L LiPF₆, 1 wt% | 2.2 | 0.8 | 1 wt% lithium tetrafluorobor ate |
| Embodiment 8 | EC:DEC:EMC=5: 3:2, 1mol/L LiPF₆, 1 wt% | 5 | 5 | 1 wt% lithium tetrafluorobor ate |
| Embodiment 9 | EC:DEC:EMC=5: 3:2, 1mol/L LiPF₆, 1 wt% | 0.1 | 0.1 | 1 wt% lithium tetrafluorobor ate |
| Contrast embodiment 1 | EC:DEC:EMC=5: 3:2, 1mol/L LiPF₆, 1 wt% | 3 | 0 | 1 wt% lithium tetrafluorobor ate |
| Contrast embodiment 2 | EC:DEC:EMC=5: 3:2, 1mol/L LiPF₆, 1 wt% | 0 | 3 | 1 wt% lithium tetrafluorobor ate |

### Embodiment 10

The difference between Embodiment 10 and Embodiment 4 was that,
the cyanosilane compound was a cyanosilane compound 1, and a 3 Ah soft pack lithium ion battery was obtained finally.

### Embodiment 11

The difference between Embodiment 11 and Embodiment 4 was that,
the cyanosilane compound was a cyanosilane compound 3, and a 3 Ah soft pack lithium ion battery was obtained finally.

### Embodiment 12

The difference between Embodiment 12 and Embodiment 4 was that,
the cyanosilane compound was a cyanosilane compound 4, and a 3 Ah soft pack lithium ion battery was obtained finally.

### Embodiment 13

The difference between Embodiment 13 and Embodiment 4 was that the solvent was EC:EMC:DMC=5:3:2, and a 3 Ah soft pack lithium ion battery was obtained finally.

### Embodiment 14

The difference between Embodiment 14 and Embodiment 4 was that the lithium salt additive was lithium methylsulfonate, and a 3 Ah soft pack lithium ion battery was obtained finally.

### Embodiment 15

The difference between Embodiment 15 and Embodiment 4 was that lithium bis-trifluorosulfonimide at a concentration of 1 wt% was used as a conventional lithium salt additive, and a 3 Ah soft pack lithium ion battery was obtained finally.

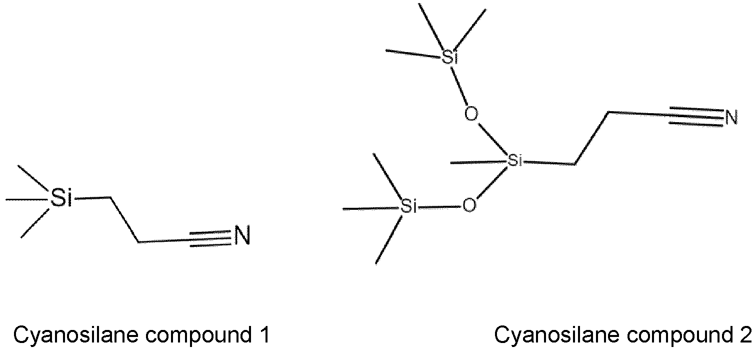

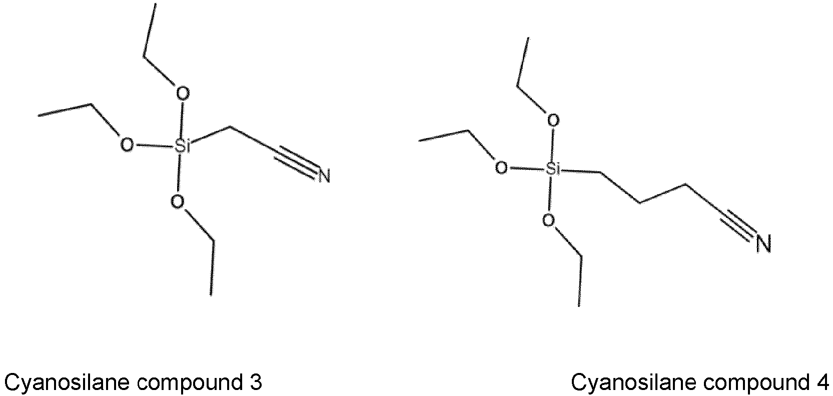

The 3 Ah soft pack lithium ion batteries prepared in Embodiments 1-15 and Contrast embodiments 1 and 2 were cycled at a 1C/1C charging-discharging current, the test voltage range was 3.0-4.5 V, and the initial capacity and initial internal resistance of battery cells were shown in Table 2.

High-voltage and high-temperature performance testing was performed on the above 3 Ah soft pack lithium ion batteries assembled in Embodiment 1-15 and Contrast embodiments 1 and 2 respectively. The specific testing method was as follows.

High-voltage and high-temperature cycling experiment: the above 3 Ah soft pack lithium ion battery was taken, charged at 0.5 C to a 4.5 V limit voltage, then switched to a constant voltage for charging, until the charging current was ≤ cut-off current, it was stilly placed for 30 min, then discharged at 0.5 C to a cut-off voltage 2.8 V, it was stilly placed for 30 min, and the charging-discharging experiment was performed according to the above working procedures. Low-temperature DCR, high-temperature cycling, and high-temperature idle performance tests were performed, and its direct current internal resistance DCR was tested during the cycling process. The low-temperature DCR and capacity retention rate of the battery cells were calculated under the high voltage, and results were shown in Table 2.

**Table 2**

| Embodiment /Contrast embodiment | Capacity /Ah | Low-temperature DCR/mΩ | 45 °C cycling capacity retention rate (400 cycles)/% | 45 °C cycling DCR growth rate/% |
|---|---|---|---|---|
| Embodiment 1 | 3.15 | 430 | 92.2 | 12.3 |
| Embodiment 2 | 3.19 | 413 | 93.1 | 12.7 |
| Embodiment 3 | 3.17 | 415 | 92.9 | 12.5 |
| Embodiment 4 | 3.20 | 411 | 93.3 | 12.2 |
| Embodiment 5 | 3.16 | 417 | 92.8 | 12.6 |
| Embodiment 6 | 3.02 | 441 | 90.5 | 14.4 |
| Embodiment 7 | 3.05 | 446 | 89.1 | 14.6 |
| Embodiment 8 | 3.07 | 439 | 90.8 | 13.7 |
| Embodiment 9 | 3.04 | 438 | 91.2 | 14.4 |
| Embodiment 10 | 3.16 | 426 | 92.9 | 12.5 |
| Embodiment 11 | 3.16 | 427 | 93.0 | 12.3 |
| Embodiment 12 | 3.20 | 410 | 93.8 | 11.0 |
| Embodiment 13 | 3.18 | 434 | 92.8 | 12.8 |
| Embodiment 14 | 3.16 | 431 | 93.0 | 12.3 |
| Embodiment 15 | 3.15 | 427 | 93.2 | 12.3 |
| Contrast embodiment 1 | 2.91 | 469 | 80.0 | 30.3 |
| Contrast embodiment 2 | 2.99 | 481 | 88.8 | 25.4 |

From the above description, it may be seen that the above embodiments of the present disclosure achieve the following technical effects.

A part of the heptamethyldisilazane may be combined with an HF to form a stable amine salt compound, and HF is effectively removed. At the same time, the remaining heptamethyldisilazane is preferentially oxidized on the cathode surface over the solvent, to form a CEI membrane, thereby the problem of gas production and transition metal dissolution under the high voltage is improved, and the high-temperature cycle performance of the lithium ion batteries is enhanced. The cyanosilane compound is preferred for both solvent oxidation and solvent reduction, and may form an SEI membrane and the CEI membrane on the cathode and anode surfaces. The CEI membrane containing an Si-C≡N structure has the higher conductivity, and it is more helpful to reduce the impedance and thus reduce the low-temperature direct current internal resistance of the lithium ion batteries. In addition, the amine salt compound may participate in the formation of the SEI membrane and the CEI membrane by the cyanosilane compound and act as a part of the SEI membrane and the CEI membrane. It is not only beneficial to improve the conductivity of the SEI membrane and the CEI membrane, but also the SEI membrane and the CEI membrane obtained by the synergistic effect of the heptamethyldisilazane and the cyanosilane compound are thinner, more uniform, and denser, thereby the low-temperature direct current internal resistance of the lithium ion battery may be further reduced, the cycle performance of the lithium ion battery is improved, the growth rate of the direct current internal resistance in the cycle process is reduced, and the stability and safety of the lithium ion battery are effectively improved on the whole.

The above are only preferred embodiments of the present disclosure and are not intended to limit the present disclosure. For those skilled in the art, the present disclosure may have various modifications and variations. Any modifications, equivalent replacements, improvements and the like made within the spirit and principles of the present disclosure shall be contained within the scope of protection of the present disclosure.

## Claims

1. An electrolyte, wherein the electrolyte comprises an organic solvent, LiPF₆, and an additive, the additive comprises heptamethyldisilazane and a cyanosilane compound, and the cyanosilane compound has the following structural formula: 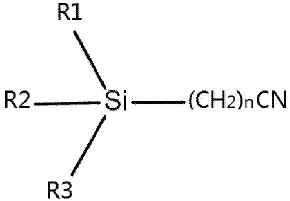
wherein, n is any one integer from 1 to 6,
R1, R2, and R3 are each independently selected from any one or more of substituted or unsubstituted C₁-C₁₀ alkyl, substituted or unsubstituted C₁-C₁₀ alkoxy, substituted or unsubstituted C₂-C₁₀alkynyl, substituted or unsubstituted C₆-C₁₂alkylaryl, and (R4)₃SiO-, and R4 is selected from any one of substitute or unsubstitnted C₁-C₁₀ alkyl.

2. The electrolyte according to claim 1, wherein the n is any one integer from 1 to 3, the R1, the R2, and the R3 are each independently selected from any one or more of substituted or unsubstituted C₁-C₄ alkyl, substituted or unsubstituted C₁-C₄ alkoxy, substituted or unsubstituted C₂-C₄ alkynyl, substituted or unsubstituted phenyl, and (R4)₃SiO-, and the R4 is selected from any one of substituted or unsubstituted C₁-C₄ alkyl.

3. The electrolyte according to claim 2, wherein the R1, the R2, and the R3 are each independently selected from any one or more of methyl, ethyl, methoxy, ethoxy, ethynyl, phenyl, (CH₃)₃SiO-, and (CH₃CH₂)₃SiO-.

4. The electrolyte according to claim 3, wherein the cyanosilane compound is selected from any one or more of 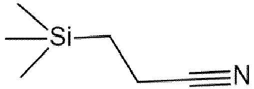 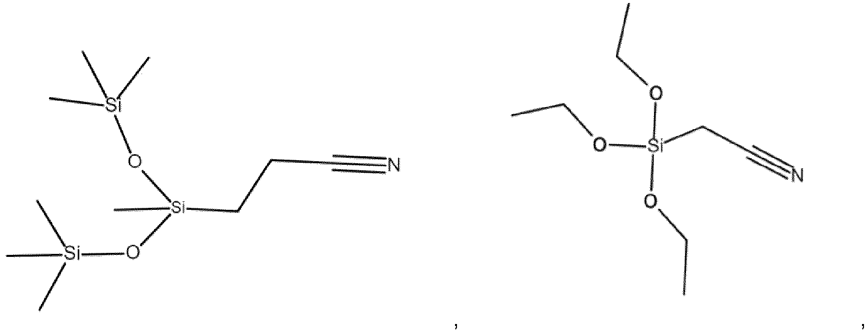 and

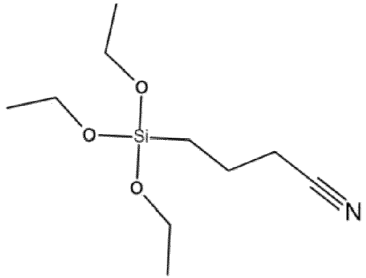

5. The electrolyte according to any one of claims 1 to 4, wherein the mass of the heptamethyldisilazane is 0.1-5 wt% of the total mass of the electrolyte, and/or the mass of the cyanosilane compound is 0.1-5 wt% of the total mass of the electrolyte, and/or the mass ratio of the heptamethyldisilazane to the cyanosilane compound is 1:4-2:1.

6. The electrolyte according to any one of claims 1 to 4, wherein the organic solvent is selected from any one or more of ethylene carbonate, propylene carbonate, dimethyl carbonate, diethyl carbonate, methyl ethyl carbonate, methyl propyl carbonate, ethyl acetate, γ-butyrolactone, propyl propionate, ethyl propionate, 1,3-dioxane, and diethylene glycol dimethyl ether.

7. The electrolyte according to any one of claims 1 to 4, wherein the electrolyte further comprises a lithium salt additive, the concentration of the lithium salt additive is 0.1-5 wt%, and the lithium salt additive is selected from any one or more of lithium hexafluoroarsenate, lithium perchlorate, lithium tetrafluoroborate, lithium methylsulfonate, lithium trifluoromethanesulfonate, lithium bis-trifluoromethanesulfonimide, and lithium bis-oxalate borate.

8. The electrolyte according to any one of claims 1 to 4, wherein the concentration of the LiPF₆ is 0.5-1.5 mol/L.

9. The electrolyte according to any one of claims 1 to 4, wherein the electrolyte further comprises a functional additive, the functional additive is 0.1-5 wt% of the total mass of the electrolyte, the functional additive is selected from any one or more of a cyclic additive, a low-temperature additive, a high-temperature additive, a flame retardant additive, and an overcharge prevention additive, and the functional additive is selected from any one or more of vinylene carbonate, fluorinated ethylene carbonate, ethylene sulfate, tris(trimethylsilane) phosphate ester, 1,3-propanesultone, methylene methanedisulfonate, 1,3,6-hexane trinitrile, tris(pentafluorophenyl) borane, lithium difluorophosphate, 3-hexylthiophene, hexafluorocyclotriphosphonitrile, and tris(hexafluoroisopropyl) phosphate ester.

10. The electrolyte according to claim 9, wherein the electrolyte comprises methyl ethyl carbonate, ethylene carbonate, diethyl carbonate, LiPF₆, vinylene carbonate, heptamethyldisilazane, and 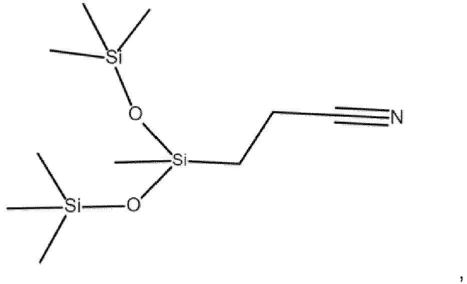 wherein the heptamethyldisilazane is 2 wt% of the electrolyte, and the 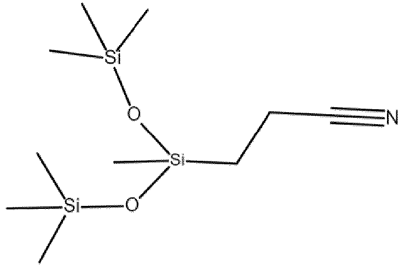 is 1 wt% of the electrolyte; or the heptamethyldisilazane is 1 wt% of the electrolyte, and the 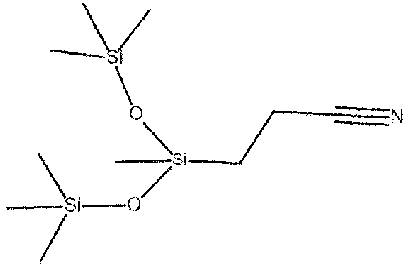 is 2 wt% of the electrolyte; or the heptamethyldisilazane is 0.6 wt% of the electrolyte, and the 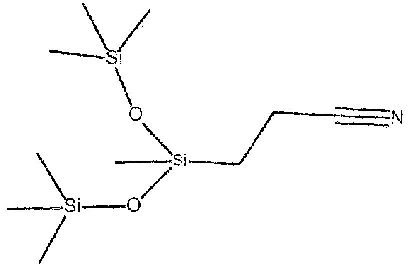 is 2.4 wt% of the electrolyte; or the cyanosilane compound is 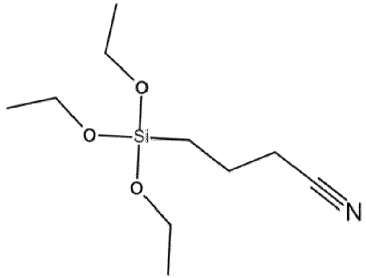 , and the heptamethyldisilazane is 2 wt% of the electrolyte, the 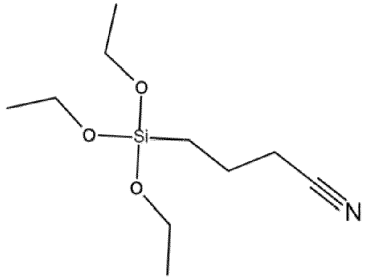 is 1 wt% of the electrolyte.

11. A lithium ion battery, comprising a cathode plate, an anode plate, and an electrolyte, wherein the electrolyte is the electrolyte according to any one of claims 1 to 10.

12. The lithium ion battery according to claim 11, wherein the cathode plate comprises a cathode active substance, the cathode active substance is selected from any one or more of lithium cobalt oxide, lithium manganese oxide, lithium nickel manganese oxide, lithium nickel cobalt manganese oxide, and lithium-rich lithium manganese oxide, the anode plate comprises an anode active substance, and the anode active substance is selected from any one or more of natural graphite, artificial graphite, silicon, and lithium titanate.
